# EUROPEAN PATENT APPLICATION

(11) **EP 4 668 765 A1**
(43) Date of publication of application: **24.12.2025**
(21) Application number: 24305962.3
(22) Date of filing: 19.06.2024
(51) Int. Cl.: H04N 21/81, G06T 17/00, H04N 21/854

(54) **EFFICIENT REPRESENTATION OF CURVE SETS**

(71) Applicant: InterDigital CE Patent Holdings, SAS, 75017 Paris (FR)
(72) Inventor: LE CLERC, Francois, 35590 L'HERMITAGE (FR); GOSSELIN, Philippe Henri, 35235 THORIGNE-FOUILLARD (FR); COVA REGATEIRO, João Pedro, 35220 CHATEAUBOURG (FR); AVRIL, Quentin, 35830 BETTON (FR)
(74) Representative: Vossius & Partner Patentanwälte Rechtsanwälte mbB

(57) **Abstract**

Some embodiments of a method may include: obtaining information describing positions of control vertices for a set of curves; obtaining information describing a curve buffer attribute corresponding to a data size of the curves in the set of curves; obtaining an ordered list of control vertices for at least two curves of the set of curves using the curve buffer attribute.

## Description

### BACKGROUND

Owing to more and more powerful graphics processing unit (GPU) hardware, 3D engines can now render 3D models of increasing complexity in real time or interactive time. As a result, the complexity and realism of 3D models used in the industry is steadily growing.

### SUMMARY

An example method in accordance with some embodiments may include: obtaining information describing positions of control vertices for a set of curves; obtaining information describing a curve buffer attribute corresponding to a data size of the curves in the set of curves; and obtaining an ordered list of control vertices for at least two curves of the set of curves using the curve buffer attribute.

For some embodiments of the example method, the set of curves includes a set of polylines encoded as a mesh.

Some embodiments of the example method may further include rendering the set of curves using the ordered list of control vertices.

For some embodiments of the example method, obtaining the ordered list of control vertices includes parsing the information describing positions of the control vertices for at least two curves of the set of curves using the curve buffer attribute.

For some embodiments of the example method, parsing the information includes: obtaining a first starting memory location in a buffer associated with positions of control vertices for the set of curves, wherein the first starting memory location corresponds to a first curve of the set of curves; and determining a second starting memory location in the buffer using the curve buffer attribute, wherein the second starting memory location corresponds to a second curve of the set of curves.

For some embodiments of the example method, the curve buffer attribute includes information corresponding to curve length for at least one curve of the set of curves.

For some embodiments of the example method, the curve buffer attribute includes a count of the control vertices for all curves in the set of curves.

For some embodiments of the example method, obtaining the ordered list of control vertices includes using a single accessor to access data in a single buffer associated with two or more curves of the set of curves.

Some embodiments of the example method may further include: detecting a presence of a curve loop property; and adding a segment to a curve of the set of curves to link a first control vertex of the curve to a second control vertex of the curve.

For some embodiments of the example method, obtaining the ordered list of control vertices for at least two curves of the set of curves using the curve buffer attribute includes generating the ordered list of control vertices for at least two curves of the set of curves using the curve buffer attribute.

Some embodiments of the example method may further include verifying the obtained information describing positions of control vertices contains POSITION attribute information for at least one curve of the set of curves.

Some embodiments of the example method may further include: obtaining one or more additional attributes associated with at least one curve of the set of curves; and using at least one of the one or more additional attributes in rendering the set of curves.

For some embodiments of the example method, the information describing the positions of the control vertices complies with Graphics Library Transmission Format (gITF).

For some embodiments of the example method, the information describing the positions of the control vertices complies with MPEG-I Scene Description format.

An example apparatus in accordance with some embodiments may include: a processor; and a computer-readable medium storing instructions operative, when executed by the processor, to cause the apparatus to perform any one of the methods listed above.

### BRIEF DESCRIPTION OF THE DRAWINGS

FIG. 1 is a system diagram illustrating an example set of interfaces for a system according to some embodiments.
FIG. 2 is a schematic illustration showing an example per-curve segmentation of the data in a mesh primitive "POSITION" attribute buffer according to some embodiments.
FIG. 3 is a flowchart illustrating an example process for parsing of the "MPEG_primitive_curve_set" extension according to some embodiments.
FIG. 4 is a flowchart illustrating an example process for reconstruction of the curve set geometry from the data encoded in the "MPEG_primitive_curve_set" extension of a glTF mesh primitive according to some embodiments.
FIG. 5 is a flowchart illustrating an example process for obtaining a condensed representation of curve data according to some embodiments.

The entities, connections, arrangements, and the like that are depicted in-and described in connection with-the various figures are presented by way of example and not by way of limitation. As such, any and all statements or other indications as to what a particular figure "depicts," what a particular element or entity in a particular figure "is" or "has," and any and all similar statements-that may in isolation and out of context be read as absolute and therefore limiting-may only properly be read as being constructively preceded by a clause such as "in at least one embodiment, ...." For brevity and clarity of presentation, this implied leading clause is not repeated *ad nauseum* in the detailed description.

### DETAILED DESCRIPTION

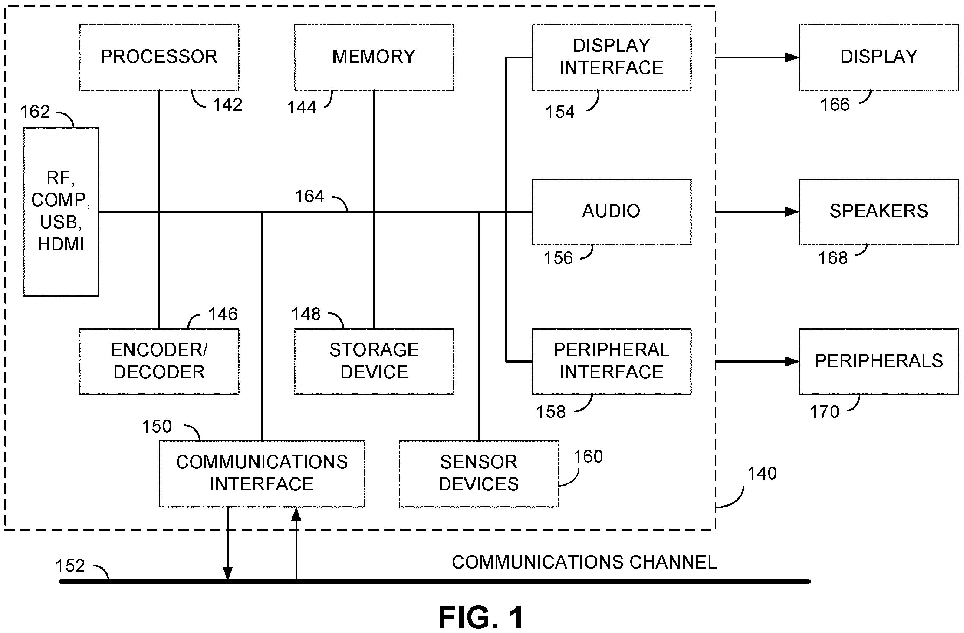

FIG. 1 is a system diagram illustrating an example set of interfaces for a system according to some embodiments. An extended reality display device, together with its control electronics, may be implemented using a system such as the system of FIG. 1. System 140 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 140, singly or in combination, can be embodied in a single integrated circuit (IC), multiple ICs, and/or discrete components. For example, in at least one embodiment, the processing and encoder/decoder elements of system 140 are distributed across multiple ICs and/or discrete components. In various embodiments, the system 140 is communicatively coupled to one or more other systems, or other electronic devices, via, for example, a communications bus or through dedicated input and/or output ports. In various embodiments, the system 140 is configured to implement one or more of the aspects described in this document.

The system 140 includes at least one processor 142 configured to execute instructions loaded therein for implementing, for example, the various aspects described in this document. Processor 142 may include embedded memory, input output interface, and various other circuitries as known in the art. The system 140 includes at least one memory 144 (e.g., a volatile memory device, and/or a non-volatile memory device). System 140 may include a storage device 148, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 148 can include an internal storage device, an attached storage device (including detachable and non-detachable storage devices), and/or a network accessible storage device, as non-limiting examples.

System 140 includes an encoder/decoder module 146 configured, for example, to process data to provide an encoded video or decoded video, and the encoder/decoder module 146 can include its own processor and memory. The encoder/decoder module 146 represents module(s) that can be included in a device to perform the encoding and/or decoding functions. As is known, a device can include one or both of the encoding and decoding modules. Additionally, encoder/decoder module 146 can be implemented as a separate element of system 140 or can be incorporated within processor 142 as a combination of hardware and software as known to those skilled in the art.

Program code to be loaded onto processor 142 or encoder/decoder 146 to perform the various aspects described in this document can be stored in storage device 148 and subsequently loaded onto memory 144 for execution by processor 142. In accordance with various embodiments, one or more of processor 142, memory 144, storage device 148, and encoder/decoder module 146 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 142 and/or the encoder/decoder module 146 is used to store instructions and to provide working memory for processing that is needed during encoding or decoding. In other embodiments, however, a memory external to the processing device (for example, the processing device can be either the processor 142 or the encoder/decoder module 142) is used for one or more of these functions. The external memory can be the memory 144 and/or the storage device 148, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 140 can be provided through various input devices as indicated in block 162. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1, include composite video.

In various embodiments, the input devices of block 162 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 140 to other electronic devices across USB and/or HDMI connections. It is to be understood that various aspects of input processing, for example, Reed-Solomon error correction, can be implemented, for example, within a separate input processing IC or within processor 142 as necessary. Similarly, aspects of USB or HDMI interface processing can be implemented within separate interface ICs or within processor 142 as necessary. The demodulated, error corrected, and demultiplexed stream is provided to various processing elements, including, for example, processor 142, and encoder/decoder 146 operating in combination with the memory and storage elements to process the datastream as necessary for presentation on an output device.

Various elements of system 140 can be provided within an integrated housing, Within the integrated housing, the various elements can be interconnected and transmit data therebetween using suitable connection arrangement 164, for example, an internal bus as known in the art, including the Inter-IC (I2C) bus, wiring, and printed circuit boards.

The system 140 includes communication interface 150 that enables communication with other devices via communication channel 152. The communication interface 150 can include, but is not limited to, a transceiver configured to transmit and to receive data over communication channel 152. The communication interface 150 can include, but is not limited to, a modem or network card and the communication channel 152 can be implemented, for example, within a wired and/or a wireless medium.

Data is streamed, or otherwise provided, to the system 140, in various embodiments, using a wireless network such as a Wi-Fi network, for example IEEE 802.11 (IEEE refers to the Institute of Electrical and Electronics Engineers). The Wi-Fi signal of these embodiments is received over the communications channel 152 and the communications interface 150 which are adapted for Wi-Fi communications. The communications channel 152 of these embodiments is typically connected to an access point or router that provides access to external networks including the Internet for allowing streaming applications and other over-the-top communications. Other embodiments provide streamed data to the system 140 using a set-top box that delivers the data over the HDMI connection of the input block 162. Still other embodiments provide streamed data to the system 140 using the RF connection of the input block 162. As indicated above, various embodiments provide data in a non-streaming manner. Additionally, various embodiments use wireless networks other than Wi-Fi, for example a cellular network or a Bluetooth network.

The system 140 can provide an output signal to various output devices, including a display 166, speakers 168, and other peripheral devices 170. The display 166 of various embodiments includes one or more of, for example, a touchscreen display, an organic light-emitting diode (OLED) display, a curved display, and/or a foldable display. The display 166 can be for a television, a tablet, a laptop, a cell phone (mobile phone), or other device. The display 166 can also be integrated with other components (for example, as in a smart phone), or separate (for example, an external monitor for a laptop). The other peripheral devices 170 include, in various examples of embodiments, one or more of a stand-alone digital video disc (or digital versatile disc) (DVR, for both terms), a disk player, a stereo system, and/or a lighting system. Various embodiments use one or more peripheral devices 170 that provide a function based on the output of the system 140. For example, a disk player performs the function of playing the output of the system 140.

In various embodiments, control signals are communicated between the system 140 and the display 166, speakers 168, or other peripheral devices 170 using signaling such as AV.Link, Consumer Electronics Control (CEC), or other communications protocols that enable device-to-device control with or without user intervention. The output devices can be communicatively coupled to system 140 via dedicated connections through respective interfaces 154, 156, and 158. Alternatively, the output devices can be connected to system 140 using the communications channel 152 via the communications interface 150. The display 166 and speakers 168 can be integrated in a single unit with the other components of system 140 in an electronic device such as, for example, a television. In various embodiments, the display interface 154 includes a display driver, such as, for example, a timing controller (T Con) chip.

The display 166 and speaker 168 can alternatively be separate from one or more of the other components, for example, if the RF portion of input 162 is part of a separate set-top box. In various embodiments in which the display 166 and speakers 168 are external components, the output signal can be provided via dedicated output connections, including, for example, HDMI ports, USB ports, or COMP outputs.

The system 140 may include one or more sensor devices 160. Examples of sensor devices that may be used include one or more GPS sensors, gyroscopic sensors, accelerometers, light sensors, cameras, depth cameras, microphones, and/or magnetometers. Such sensors may be used to determine information such as user's position and orientation. Where the system 140 is used as the control module for an extended reality display (such as control modules 124, 132), the user's position and orientation may be used in determining how to render image data such that the user perceives the correct portion of a virtual object or virtual scene from the correct point of view. In the case of head-mounted display devices, the position and orientation of the device itself may be used to determine the position and orientation of the user for the purpose of rendering virtual content. In the case of other display devices, such as a phone, a tablet, a computer monitor, or a television, other inputs may be used to determine the position and orientation of the user for the purpose of rendering content. For example, a user may select and/or adjust a desired viewpoint and/or viewing direction with the use of a touch screen, keypad or keyboard, trackball, joystick, or other input. Where the display device has sensors such as accelerometers and/or gyroscopes, the viewpoint and orientation used for the purpose of rendering content may be selected and/or adjusted based on motion of the display device.

The embodiments can be carried out by computer software implemented by the processor 142 or by hardware, or by a combination of hardware and software. As a non-limiting example, the embodiments can be implemented by one or more integrated circuits. The memory 144 can be of any type appropriate to the technical environment and can be implemented using any appropriate data storage technology, such as optical memory devices, magnetic memory devices, semiconductor-based memory devices, fixed memory, and removable memory, as non-limiting examples. The processor 142 can be of any type appropriate to the technical environment, and can encompass one or more of microprocessors, general purpose computers, special purpose computers, and processors based on a multi-core architecture, as non-limiting examples.

### Scene Description Framework for XR

Extended reality (XR) is a technology enabling interactive experiences where the real-world environment and/or a video content is enhanced by virtual content, which can be defined across multiple sensory modalities, including visual, auditory, haptic, etc. During runtime of the application, the virtual content (3D content or audio/video file for example) is rendered in real-time in a way which is consistent with the user context (environment, point of view, device, etc.). Scene graphs (such as the one proposed by Khronos / glTF and its extensions defined in MPEG Scene Description format or Apple / USDZ for instance) are a possible way to represent the content to be rendered. They combine a declarative description of the scene structure linking real-environment objects and virtual objects on one hand, and binary representations of the virtual content on the other hand.

In some embodiments, examples disclosed herein may be used in the domain of rendering of extended reality scene description and extended reality rendering. For some embodiments, for example, the present application may be applied in the context of the formatting and the playing of extended reality applications when rendered on end-user devices such as mobile devices or Head-Mounted Displays (HMD). For some example embodiments, glTF material may be rendered in a 3D environment that is rendered through a 2D screen. The examples presented herein in accordance with some embodiments are not limited to XR applications.

In XR applications, a scene description is used to combine explicit and easy-to-parse description of a scene structure and some binary representations of media content.

An XR application may also augment a video content rather than a real environment. The video is displayed on a rendering device and virtual objects described in the node tree are overlaid when timed events are detected in the video. In such a context, the node tree includes only virtual objects descriptions.

Example embodiments are described with reference to the scope of the MPEG-I Scene Description framework using the Khronos glTF extension mechanism, which supports additional scene description features, such as a node tree. However, the principles described herein are not limited to a particular scene description framework.

A User Equipment (UE) may correspond to any extended Reality (XR) device/node which may come in variety of form factors. Typical UE (e.g., XR UE) may include, but not limited to the following: Head Mounted Displays (HMD), optical see-through glasses and video see-through HMDs for Augmented Reality (AR) and Mixed Reality (MR), mobile devices with positional tracking and camera, wearables etc. In addition to the above, several different types of XR UE may be envisioned based on XR device functions for example, such as display, camera, sensors, sensor processing, wireless connectivity, XR/Media processing, and power supply, to be provided by one or more devices, wearables, actuators, controllers and/or accessories. One or more device/nodes/UEs may be grouped into a collaborative XR group for supporting any of XR applications/experience/services.

Owing to more and more powerful graphics processing unit (GPU) hardware, 3D engines can now render 3D models of increasing complexity in real time or interactive time. As a result, the complexity and realism of 3D models used in the industry is steadily growing.

A case in point is the modeling and rendering of textures made up of a large number of thin lines, such as human hair or grass. Until a few years ago, real-time rendering of hair in 3D engines was only possible using low-complexity models such as textured meshes or polygon strips. In these models, the geometry of the hair volume is defined as a coarse polygonal mesh surface, and the strands are rendered as 2D textures mapped to the mesh surface. The lack of realism of such representations tended to restrict them to the rendering of cartoony characters.

Recently, Epic Games introduced a technology for photo-realistic rendering of hair in real-time in their Unreal Engine game engine. The white paper *Grooming for Real-Time Realism: Hair and Fur with Unreal Engine,* UNREAL ENGINE, *available at* www<dot>unrealengine<dot>com/en-US/blog/realistic-hair-and-fur-with-unreal-engine-get-the-white-paper describes a hair model that consists of several tens of thousands of 3D curves modeling individual strands in a hairstyle. The shape of each 3D curve is driven by the positions of a set of 3D points known as "control vertices". Thus, this representation of a hairstyle involves a large set of 3D curves, which are each represented using an array of 3D points.

Hairstyle models are needed, for example, in online video games or "metaverse" virtual world platforms where each user is represented by a digital avatar. Users control the behavior and displacement of their avatars by pressing keys on a keyboard or through a joystick on a game console. The digital representation of the avatar needs to be updated at every frame as the avatar moves in the 3D environment of the platform. The rendering of highly realistic human-like avatars, which is a desirable feature in such platforms, calls for strand-based representations of the avatar hair that involve a large number of 3D curves.

This application describes, in accordance with some embodiments, a memory-efficient representation of such large sets of 3D curves that may be used, for instance, to describe 3D hair and grass models in standardized transmission formats for 3D scenes.

### Example Problem to be Solved

Large 3D curve sets may be represented as individual curve primitives attached to a larger object. This methodology is the case for instance in the gITF scene description standard. See *Khronos gITF Specification for the Efficient Transmission and Loading of 3D Scenes and Models by Engines and Applications,* KHRONOS, Version 2.0, *available at*: khronos<dot>org/gltf/ (*"Khronos glTF Specification"*))*.*

A set of curves in glTF is represented by a mesh object containing a set of polyline primitives. The control vertices of glTF polylines may be used by extension to represent control points of parametric curves such as Béziers, splines, or NURBS curves. When this is the case, the position of a given point on a curve is expressed as a linear combination of the positions of at least two control vertices describing the curve within a polyline mesh primitive with given linear combination weights. Similarly, the value of an attribute, for instance a normal vector for the "NORMAL" attribute or a UV coordinate for the "TEXCOORD_n" attribute, of the given point on a curve is expressed as the linear combination of the attribute values of at least two control vertices with the same given linear combination weights.

In a mesh representation of a set of curves, in general, each individual curve is represented by a distinct polyline primitive whose topology mode is set to either LINE_STRIP or LINE_LOOP. As an exception, a mesh whose topology mode is set to LINES may hold an arbitrary number of lines within a single mesh primitive. However, lines in this mode are restricted to line segments defined by just two control vertices, the starting point and the ending point of the segment. Aside from the LINES topology mode, a polyline mesh primitive in glTF whose topology mode is set to either LINE_STRIP or LINE_LOOP represents a single curve. The mesh primitive holds an "attributes" array of attribute elements in which each attribute element is represented using a (key, value) pair (e.g., "POSITION" : 0). The attributes of a mesh primitive curve define its geometry and photometry. The attribute whose key is "POSITION" is associated with an accessor value that points to the buffer holding the line geometry data. Such data consists of the 3D coordinates of the control vertices of the polyline. Other attributes may provide for example normal vectors, tangent vectors, colors, and\or UV coordinates of the control vertices.

A strand-based hairstyle model may be represented by a gITF mesh. However, if, for instance, the model consists of 100,000 strands, then its glTF representation will correspondingly hold 100,000 mesh primitives. Each of these primitives will hold a ("POSITION", accessor) pair to define its geometry, and possibly other (key, value) pairs to define, e.g., normal vectors, tangent vectors, colors, and\or UV coordinates at each control vertex.

The Code Listing 1 shown below is a code listing for an example glTF description of such a model. The description / code listing relates to a scene that consists of a single node object to which a single mesh object, named "my_hairstyle_model", is attached. This mesh, which is the only element in the "meshes" array, holds 100,000 primitives. For the sake of clarity, only the first four primitives and the last primitive are shown.

Each primitive represents a 3D curve made up of control vertices whose positions, normal vectors, and texture coordinates in UV space are represented respectively by the "POSITION", "NORMAL", and "TEXCOORD_0" attribute keys. The data for each attribute key of each 3D curve is stored in a buffer pointed to by an accessor that uses a specified index in the "accessors" array. The "accessors" array is omitted from the code listing.

For instance, the vertex coordinates of the second 3D curve in the description, represented by the second element in the "primitives" array, is described using three attributes, including an attribute whose key is "POSITION" and whose value is 3. This value indicates the index into the "accessors" array for the accessor pointing to the "POSITION" data for the considered 3D curve.

The "mode" attribute of each primitive element of "my_hairstyle_model" is set to 3. This "mode" attribute indicates that the topology type of the curve is LINE_STRIP. Hence, the curve is represented as a polyline, and each vertex in the buffer referenced by the "POSITION" accessor (except for the first and the last vertex) is to be interpreted as both the endpoint of a line segment and the starting point of the next line segment in the polyline.

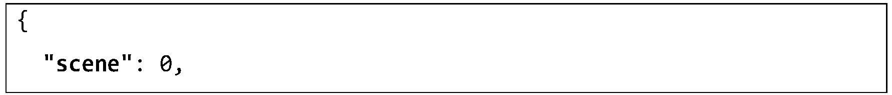

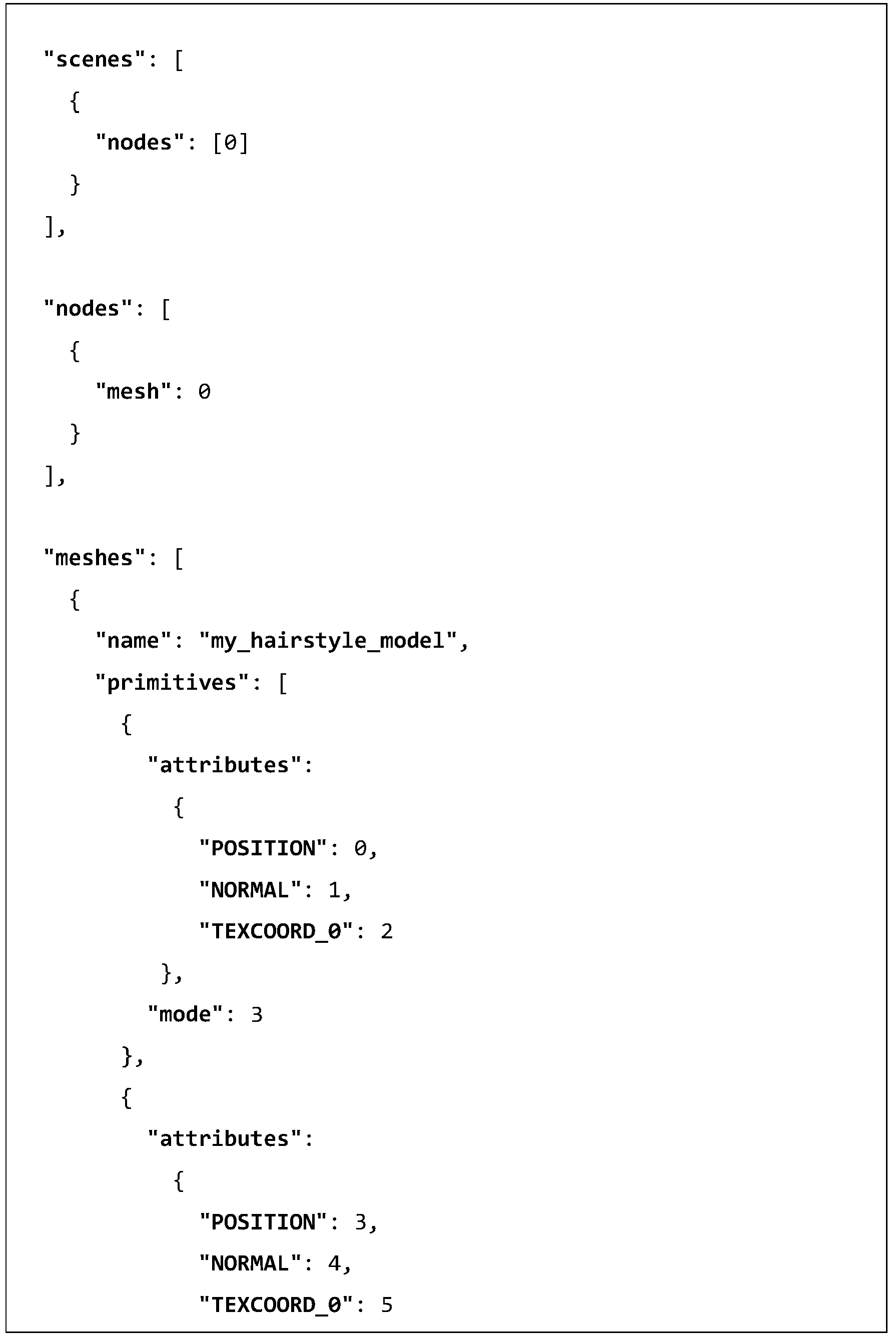

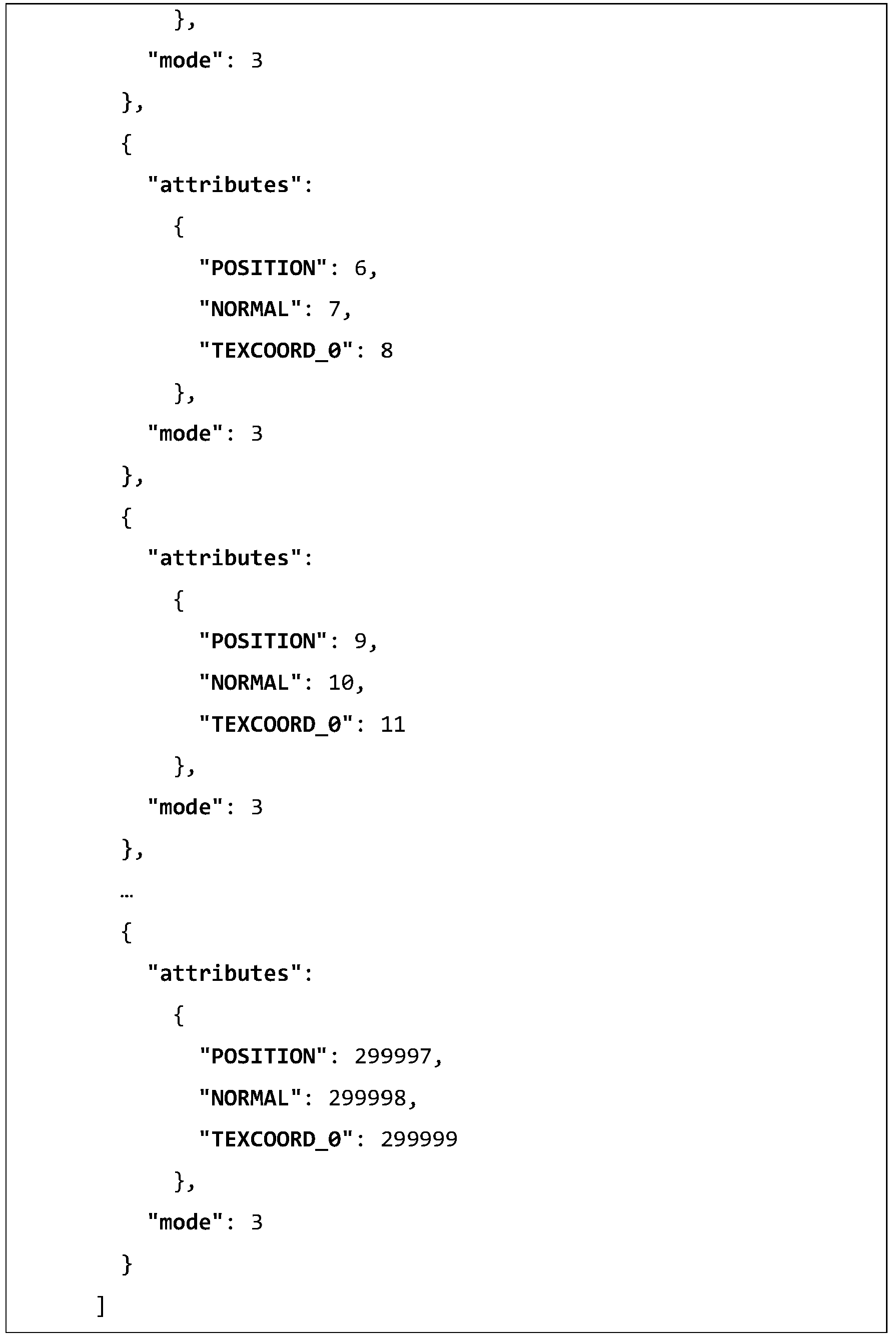

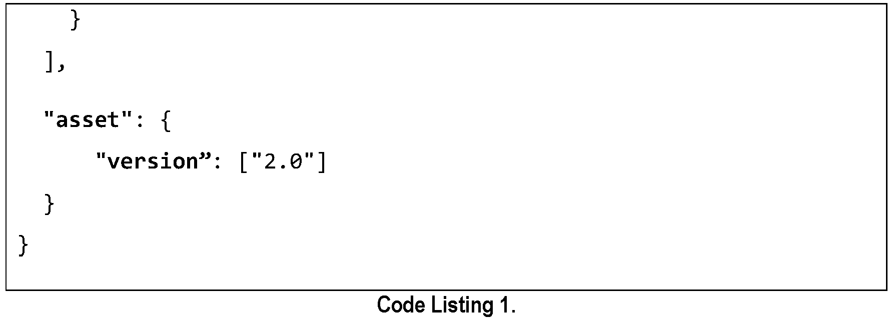

The full glTF description (code listing) is extremely long with 100,000 elements of the mesh "primitives" array, in which each element contains descriptions of the "POSITION", "NORMAL", and "TEXCOORD_0" attributes, including their accessor index values. Furthermore, the specification of the "mode" attribute for every curve in such a description would often be redundant, since all 3D curves in a set often share the same topology type.

This application describes a representation of large curve sets in which each property of the curves in the curve set, or in a large subset of the curve set, may be represented using a single buffer referenced by a single accessor in the description (code listing). This representation is understood to be much more compact than current representations, because the whole set of 3D curves is represented by a single primitive and its attributes rather than by one primitive per curve.

This application, in accordance with some embodiments, describes a set of curves using an "MPEG_primitive_curve_set" extension of the glTF mesh primitive object. This extension allows representation of a large set of curves using a single mesh primitive. Such a structure may significantly reduce the size of the description of a large curve set by replacing the specification of a large number of per-curve attributes and corresponding accessor indexes with the specification of a single attribute and corresponding accessors for the whole curve set.

Furthermore, this application, in accordance with some embodiments, describes a new and more efficient way to define large curve sets in the glTF format (and, by extension, in the MPEG-I Scene Description format). A large curve set may be used to define a realistic hair model or to model other effects, such as fur or grass. In the case of hair, a realistic rendering may specify 100,000 individual curves, each with a potentially different number of control points. Such a large curve set may be defined in gITF format; however, the current model specifies attribute data (e.g., POSITION, NORMAL, TEXCOORD_0) for the control points of each curve in the curve set as single buffers that are each accessed via a single accessor. This structure may work for a small number of curves, but quickly becomes unwieldy for larger curve sets (e.g., for a hair model). This application, in accordance with some embodiments, describes packing the data for each attribute type into a single buffer accessed via a single accessor. For example, the POSITION values for all the vertices of all the polyline curves in the curve set are held in one single buffer and the TEXCOORD_0 values are held in a single separate buffer. With this new accessor structure, the glTF code may specify only a single primitive to cover the entire curve set, regardless of the number of curves.

While the description below complies with the MPEG-I Scene Description format, its meaning and use is generic. The example representation may be encoded in other scene description formats, such as XML or USD.

The "MPEG_primitive_curve_set" extension specifies a new topology type for mesh primitive objects. This topology type is implied by the presence of the extension and needs not be specified using an extra value of the mesh. primitive .mode enumeration.

The "MPEG_primitive_curve_set" extension describes in a single mesh primitive the geometry and, for some embodiments, the photometry of a curve set containing an arbitrary number of curves, in which each curve consists of an arbitrary number of control vertices, The curves may be polylines, in which case each pair of consecutive vertices in the description defines a segment of the polyline. The curves also may be parametric curves such as Béziers, spline or NURBS curves, in which case the control vertices are not necessarily located on the curve but define a parameterization of a portion of the curve, as mentioned above.

Each of the properties, such as 3D position or texture coordinate, of all the control vertices of all the curves in the curve set is specified using a single glTF attribute. As specified in the glTF standard, an attribute is described using a (key, value) pair, in which the key specifies the semantic of the attribute. The value is the index into the "accessors" array of the accessor pointing to the buffer where the attribute values are stored.

For instance, the attribute that specifies the 3D coordinates of the control vertices is described using the "POSITION" key and a value corresponding to the index of the accessor that points to the buffer holding the triplets of 3D coordinates of each control vertex of each curve in the set. The attribute data for the control vertices of a given curve must be stored at consecutive positions in the buffer. The control vertex ordering for a given curve in the buffer must follow the ordering of control vertices along the curve, starting at one end and ending at the other. Each property of all the control vertices of all the curves in the set is described in a single buffer associated with a single attribute. This structure makes the description of the curve set much more compact than using the current gITF specification (version 2.0), in which attributes and corresponding buffers may only describe one curve, thereby requiring a large number of attributes to describe large curve sets.

The "MPEG_primitive_curve_set" extension includes a new "curve_lengths" property that defines the index of an accessor referencing a buffer that holds the count of control vertices of each curve in the curve set. The ordering of curves in this buffer must match the ordering of curves in the attributes describing the properties of the control vertices in the mesh primitive extended by the considered "MPEG_primitive_curve_set" extension.

Each attribute in the mesh primitive extended by "MPEG_primitive_curve_set" stores a predetermined number of elements per control vertex. For instance, the "POSITION" attribute holds three elements for each control vertex, corresponding to the three coordinates of this control vertex in the 3D scene being described. The "TEXCOORD_n" attribute holds two elements corresponding to two UV coordinates per control vertex. Based on this known predetermined number of elements per control vertex for each attribute and the number of control vertices in each curve, specified in the "curve_lengths" property, an application may segment the buffers holding the data for each mesh primitive attribute into sections representing the data for each curve and for each control vertex of a curve.

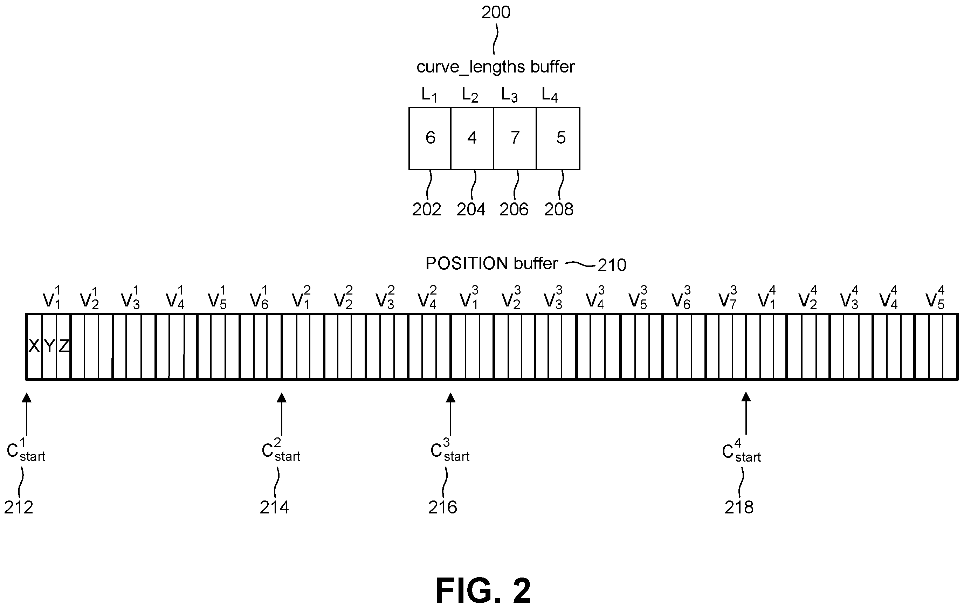

FIG. 2 is a schematic illustration showing an example per-curve segmentation of the data in a mesh primitive "POSITION" attribute buffer according to some embodiments. An example segmentation scheme is illustrated in FIG. 2 for the "POSITION" attribute of a mesh primitive representing a set of 4 curves. The four curves in this example have 6, 4, 7, and 5 control vertices, respectively. Curve lengths *L₁* to *L₄* 202, 204, 206, 208 are stored in a 4-element curve_lengths buffer 200 pointed to by an accessor associated with the "curve_lengths" property. The curve_lengths buffer 200 is shown at the top of FIG. 2. The POSITION buffer 210 associated with a "POSITION" attribute holds a "VEC3" element per control vertex containing the X, Y, Z coordinates of the control vertex. Hence, the POSITION buffer 210 for this example holds six "VEC3" elements for the first curve, four "VEC3" elements for the second curve, seven "VEC3" elements for the third curve, and five "VEC3" elements for the fourth curve. The content of the POSITION buffer 210 is shown at the bottom of FIG. 2. The *Vⱼⁱ* blocks represent the "VEC3" elements of the *j*^{th} control vertex of the *i*^{th} curve. The *Cₛₜₐᵣₜⁱ* pointers 212, 214, 216, 218 point to the first value representing the *i*^{lh} curve in the buffer.

For some embodiments, when all the curves in the described curve set have the same number of control vertices, the "curve_lengths" property of the "MPEG primitive_curve_set" extension may be removed and replaced by a "vertex_count" property that indicates the number of control vertices of all the curves. The "vertex_count" property may be represented as an integer. The properties "curve_lengths" and "vertex_count" are mutually exclusive. Property "vertex_count" may be used only when all the curves in the curve set share the same vertex count.

For some embodiments, a boolean "loop" property is added to the "MPEG_primitive_curve_set" extension. This property, which may be used for some embodiments, is set to false by default. If the property is present in the description and is set to true, the first control vertex of each curve in the curve set should be appended at the end of the array of control vertices for the curve to construct an extra segment of the curve from its last control vertex to its first control vertex, in the same way as gITF mesh primitives whose topology type is set to LINE_LOOP. If the curve is a polyline, this extra segment closes the polyline.

### glTF Syntax of the Descriptor

The application describes the geometry and photometry of a set of curves in an "MPEG_primitive_curve_set" extension of the glTF mesh primitive object. Table 1 lists the properties of the "MPEG_primitive_curve_set" extension of the glTF mesh primitive. The properties "curve_lengths" and "vertex_count" are mutually exclusive properties.

The "curve_lengths" property is the index of an accessor that points to a buffer specifying the control vertex count of each curve in the curve set. If all curves in the curve set have the same vertex count, "curve_lengths" may be replaced by an integer "vertex_count" property that specifies this count. "curve_lengths" and "vertex_count" are mutually exclusive properties.

The "loop" property, which may be used for some embodiments, is set to false by default. When present and set to true, the property requires the addition of an extra segment at the end of each curve in the set from its last control vertex to its first control vertex.

**Table 1.**

| **Name** | **Type** | **Required** | **Description** |
|---|---|---|---|
| curve_lengths | integer | Yes | Index of the accessor referencing the buffer holding the count of control vertices for each curve in the set. |
| vertex_count | integer | Yes | Number of control vertices shared by all curves in the considered curve set. |
| loop | boolean | No | When set to true, a final segment is added to each curve from its last control vertex to its first control vertex. The default value is false. |

### Example MPEG-I SD Description

Code Listing 2 shown below is a code listing for an example scene description in MPEG-I SD format. This example describes the same scene discussed earlier, which has a single mesh object attached to a single node. This single mesh object, named "my_hairstyle_model", has 100,000 3D curves that are represented by a single primitive, in which the primitive is described by a single set of "POSITION", "NORMALS", and "TEXCOORD_0" attributes. The example code listing assigns index values of 0, 1, and 2, respectively, to the accessors for each of these attributes.

For some embodiments, the whole set of curves is described using a single mesh primitive. Accordingly, the only mesh primitive instance in the "primitives" array of the description is extended with an "MPEG_primitive_curve_set" extension. The "mode" property of the primitive that specifies its topology type is not set in the description, hence initialized by default to TRIANGLES. The value of this property is irrelevant for this situation, since the presence of an "MPEG_primitive_curve_set" extension for the primitive indicates that the primitive describes a curve set.

The "curve_lengths" property in the extension is associated with the accessor whose index is 3 in the "accessors" array. This accessor points to the bufferView indexed by 3 in the "bufferViews" array, which in turn references the buffer indexed by 3 in the "buffers" array. This buffer holds a base64 encoding of the 4 elements of the curve_lengths buffer array 200 shown at the top of FIG. 2. The curve_lengths buffer array holds the vertex count for each curve in the curve set. The vertex counts of the 4 curves are encoded as unsigned int numbers, which is indicated by the 5125 value for the "componentType" property of the accessor associated with the "curve_lengths" property. According to the glTF standard, each unsigned int is stored on 4 bytes, hence the total number of bytes in the vertex count buffer (byteLength) is 16.

As mentioned above, the accessors indexed by 0, 1 and 2, as well as the corresponding bufferviews and buffers, specify the data of the "POSITION", "NORMAL" and "TEXCOORD_0" attributes of the control vertices of the curves in the curve set, respectively. For readability, their specification is omitted in the example scene description code listing shown in Code Listing 2.

The extension does not define a "loop" property. Hence, curves are specified as open, as opposed to closed, polylines.

Since the mesh in the code listing (description) of Code Listing 2 holds a single primitive element, the "POS ITION", "NORMALS" and "TEXCOORD_0" attributes of the curves that the mesh contains are instantiated only once in the description, making the code listing of Code Listing 2 much shorter than its earlier version shown in Code Listing 1.

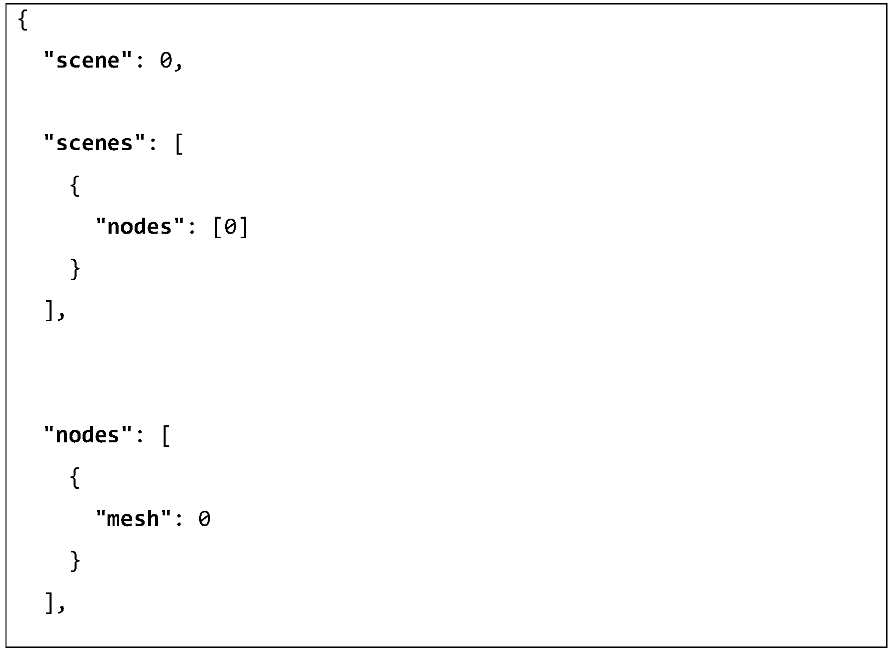

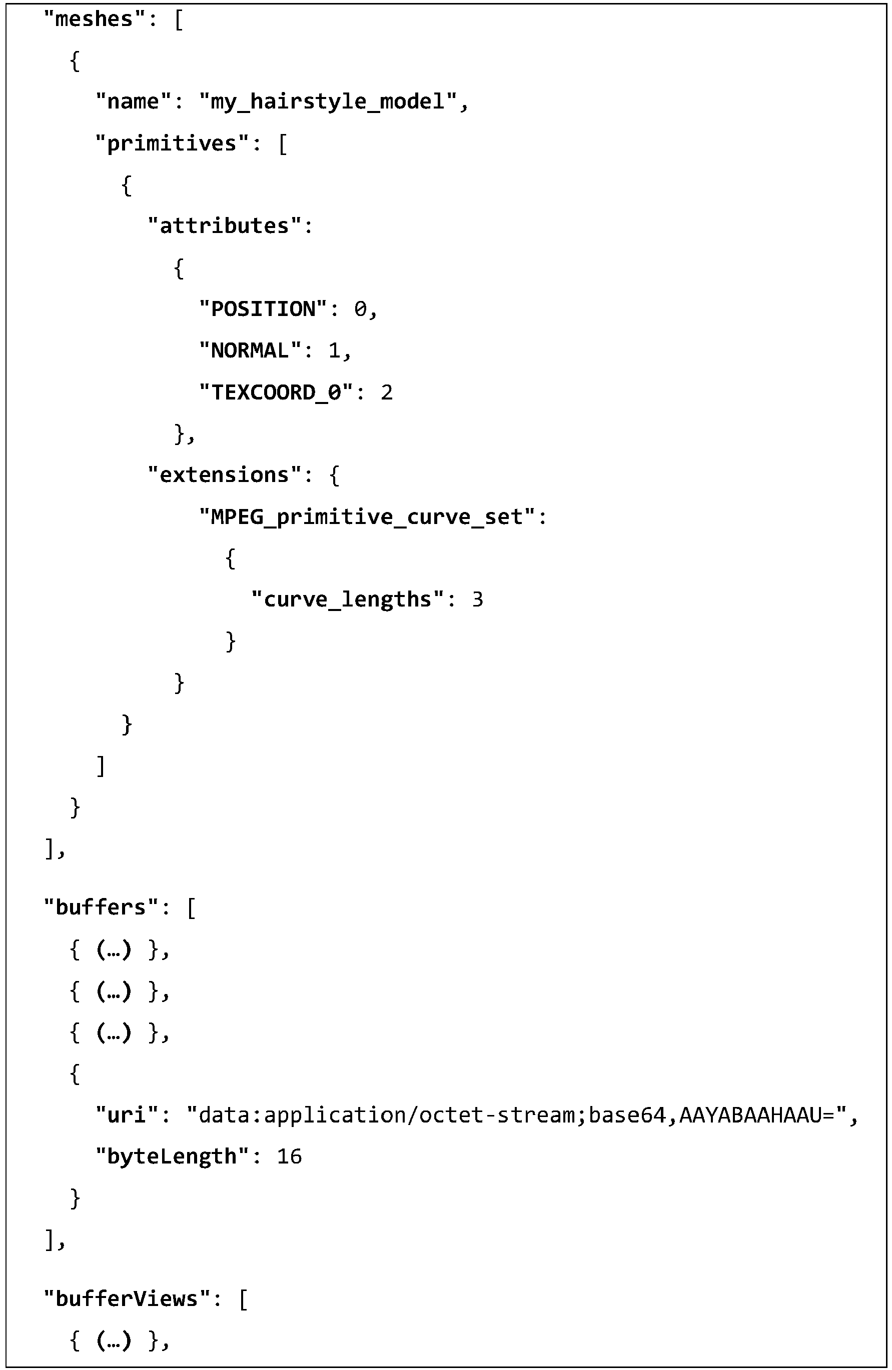

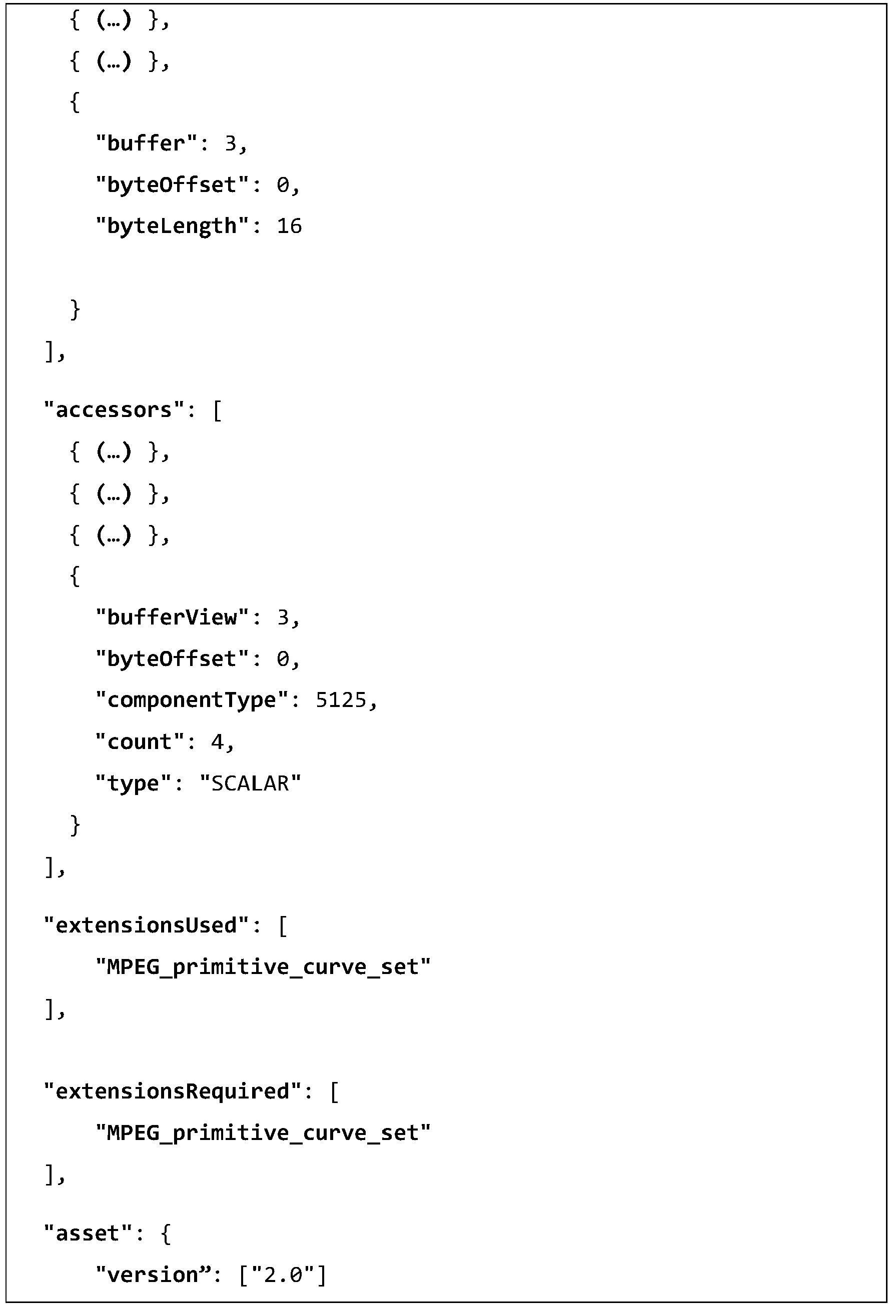

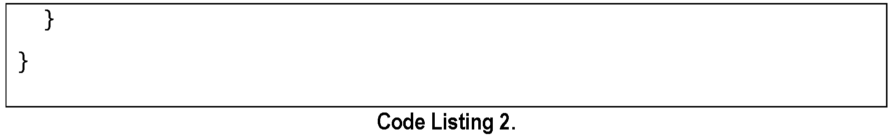

### Parsing of the Mesh Primitive Extended by "MPEG_primitive_curve_set"

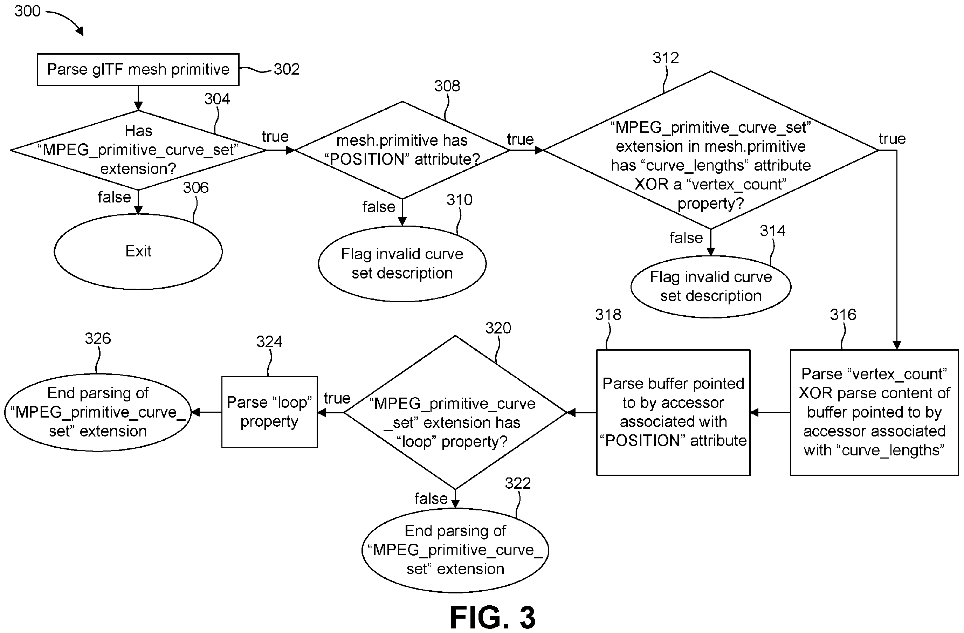

FIG. 3 is a flowchart illustrating an example process for parsing of the "MPEG_primitive_curve_set" extension according to some embodiments. Parsing of a scene description using the "MPEG_primitive_curve_set" extension of a glTF mesh primitive may proceed as described below regarding FIG. 3.

For the example process 300 shown in FIG. 3, the scene description is parsed 302 to detect instances of mesh primitives. These instances are parsed to detect the presence of an "MPEG_primitive_curve_set" extension (step 304). The mesh primitives that have no such extension may exit 306.

in accordance with some embodiments, the mesh primitives that have an "MPEG_primitive_curve_set" extension describe a curve set. These primitives must specify the geometry of the curves, which is described through the 3D positions of their control vertices. In step 308, a test is performed to determine if an attribute with the "POSITION" key is present in the "attributes" object of each primitive. If this test fails, the description is flagged 310 as invalid.

If the test of step 308 passes, then in step 312 the "MPEG_primitive_curve _set" extension is parsed for the presence of a "curve_lengths" property and for the presence of a "vertex_count" property. These two properties are mutually exclusive. If both properties or none of these properties are detected, the description is flagged 314 as invalid. The test(s) performed in step 312 may be represented by an XOR operator for some embodiments.

If the test(s) of step 312 pass, then in step 316 the value of "vertex_count" or the content of the buffer pointed to by an accessor associated with the "curve_lengths" key is parsed to obtain the number of vertices of each curve in the curve set. In step 318, the content of the buffer pointed to by the accessor associated to the "POSITION" key in the "mesh.primitives.attributes" object is parsed to obtain the coordinates of the control vertices of all curves in the curve set. This information is combined with the numbers of vertices of the curves in the curve set parsed in step 316 to determine the geometries of all the curves in the curve set. Other attributes, such as "TANGENT" or "TEXCOORD_0", may be present in the scene description to further specify the geometry and photometry of the curve set represented by the primitive. For readability, the parsing of these attributes is not shown in FIG. 3.

in step 320, the presence of a "loop" property is tested in the "MPEG_primitive_curve_set" extension. If no such property is found, the parsing ends 322. Else, the value of the property is parsed in step 324, and the parsing ends 326.

### Processing Model

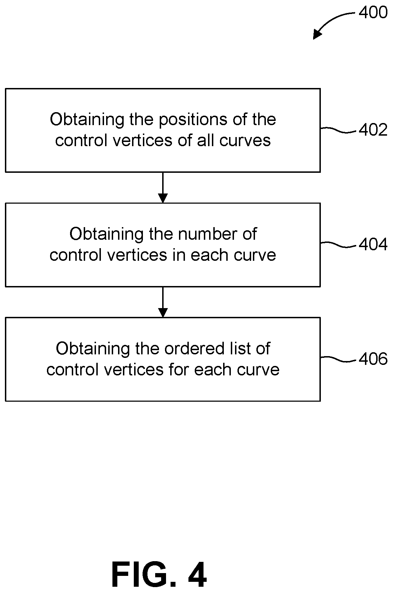

FIG. 4 is a flowchart illustrating an example process for reconstruction of the curve set geometry from the data encoded in the "MPEG_primitive_curve_set" extension of a glTF mesh primitive according to some embodiments. A scene description including a representation of a set of curves is meant to be used by an application for processing or rendering the curve set. This representation relies on the "MPEG_primitive_curve_set" extension of a glTF mesh primitive to describe the geometry and the photometry of the curve set. An example set of steps used to reconstruct the geometry of the curve set from its description is shown on FIG. 4.

in step 402 of the example process 400 of FIG. 4, the positions of all the control vertices of all the curves in the curve set are obtained from the buffer pointed to by the accessor associated with the mesh primitive attribute whose key is "POSITION". At this stage, the assignment of the control vertices to the curves in the curve set is not yet determined. Other attributes, such as "TANGENT" or "TEXCOORD_0", may be present in the scene description to further specify the geometry and photometry of the curve set represented by the primitive. These attributes may be processed in the same way as the "POSITION" attribute.

in step 404, the number of control vertices of each curve in the curve set is obtained by parsing properties of the "MPEG_primitive_curve_set" extension. If the number of vertices is the same for all curves in the set, the number of vertices may be provided by the "vertex_count" property. If the number of vertices is not the same for all curves in the set, then the number of vertices for each curve in the curve set is obtained by parsing the buffer pointed to by an accessor associated with the "curve_lengths" property.

in step 406, the control vertices whose positions were obtained in step 402 are assigned to the curves in the curves set, based on the curve lengths or the number of control vertices for each curve obtained in step 404. For some embodiments, it is necessary that the ordering of vertices in the buffer of the "POSITION" attribute meets two conditions. First, the control vertices of a given curve must be stored consecutively according to their positioning along the curve in this buffer. Second, the ordering of curves in this buffer must be the same as in the buffer associated with the "curve_lengths" property, when this property is present in the description.

The assignment of the control vertices to the curves in the set proceeds iteratively from the beginning of the buffer associated with the "POSITION" attribute to its end. Let *Lᵢ* be the length (the number of control vertices) of the *i*^{th} curve in the curve set. The values of *Lᵢ* for all the curves in the curve set are obtained in step 404. First, the first *3L₁* elements of the "POSITION" buffer are read. These elements are the *X, Y, Z* coordinates of the vertices of the first curve in the set, whose length is *L₁.* Second, the next *3L₂* elements of the "POSITION" buffer are read as the *X, Y, Z* coordinates of the vertices of the second curve in the set, whose length is *L₂*. The next *3L₃* elements of the "POSITION" buffer provide the coordinates of the control vertices of the third curve. This process is iterated for each curve in the set until all the control vertices coordinates in the buffer have been assigned to the curves in the set. This process yields the positions of the control vertices of all the curves in the curve set, which defines the geometry of the curve set.

The geometry of the curve set obtained in step 406 is used for processing or rendering the curve set. For some embodiments, the color of the curves may be obtained. In a gITF scene description, this information may be provided through attributes of the mesh primitive such as "COLOR_n" or "TEXCOORD_n".

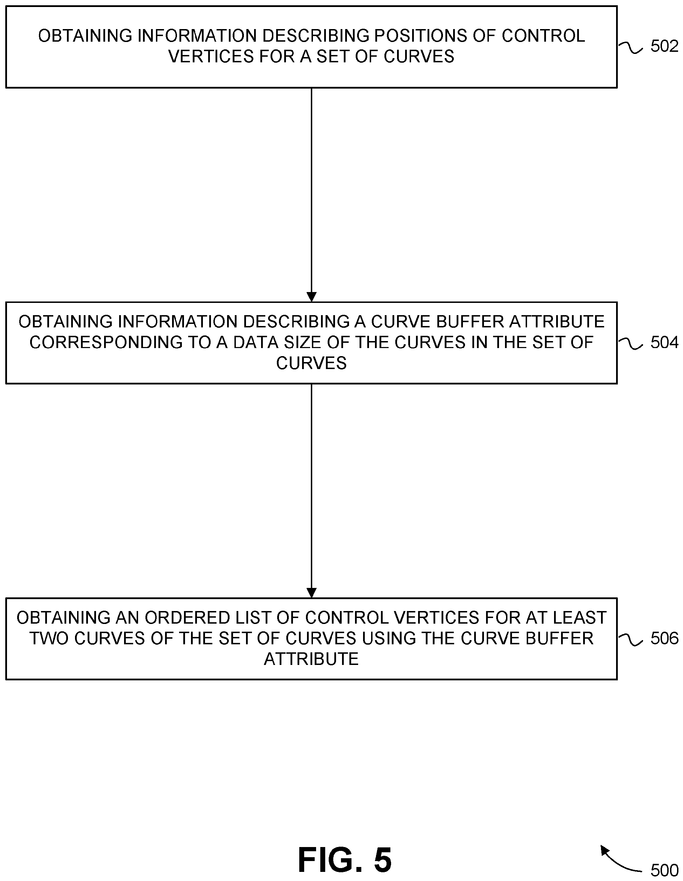

FIG. 5 is a flowchart illustrating an example process for obtaining a condensed representation of curve data according to some embodiments. For some embodiments, an example process 500 may include obtaining 502 information describing positions of control vertices for a set of curves. For some embodiments, the example process 500 may further include obtaining 504 information describing a curve buffer attribute corresponding to a data size of the curves in the set of curves. For some embodiments, the example process 500 may further include obtaining 506 an ordered list of control vertices for at least two curves of the set of curves using the curve buffer attribute.

For some embodiments, the example process 500 may further include rendering the set of curves using the ordered list of control vertices. The set of curves may correspond to, e.g., a mesh, e.g., a glTF mesh, encoding the ordered list of control vertices. For some embodiments, the example process 500 may further include encoding to and/or decoding from a bitstream: (a) the information describing positions of control vertices for the set of curves, (b) the information describing a curve buffer attribute corresponding to a data size of the curves in the set of curves; and/or (c) the ordered list of control vertices for at least one curve of the set of curves. For some embodiments, the example process 500 may further include processing the set of curves using the ordered list of control vertices. For some embodiments, the set of curves may comprise a set of polylines. In some embodiments, the set of polylines may be encoded as a mesh, e.g., a glTF mesh. An object such as a glTF object can describe, e.g., in gITF, and by extension in MPEG-I SD, a point cloud, a 3D mesh (a set of connected polygonal faces), or a curve set. The curve set as described herein may be, e.g., polylines and collections of polylines. For some embodiments, the set of curves is encoded in glTF as a mesh instance. For some embodiments, the roots of the curves are attached to a mesh. For some embodiments, a loop property may be applied to each curve in the set individually to which a respective segment is to be added between the last vertex and the first vertex of the curve to close the curve.

An example apparatus in accordance with some embodiments may include at least one processor configured to perform any one of the methods described within this application. An example apparatus in accordance with some embodiments may include a computer-readable medium storing instructions for causing one or more processors to perform any one of the methods described within this application. An example apparatus in accordance with some embodiments may include at least one processor and at least one non-transitory computer-readable medium storing instructions for causing the at least one processor to perform any one of the methods described within this application. An example signal in accordance with some embodiments may include a bitstream generated according to any one of the methods described within this application.

While the methods and systems in accordance with some embodiments are generally discussed in context of extended reality (XR), some embodiments may be applied to any XR contexts such as, e.g., virtual reality (VR) / mixed reality (MR) / augmented reality (AR) contexts. Also, although the term "head mounted display (HMD)" is used herein in accordance with some embodiments, some embodiments may be applied to a wearable device (which may or may not be attached to the head) capable of, e.g., XR, VR, AR, and/or MR for some embodiments.

An example method in accordance with some embodiments may include: obtaining information describing positions of control vertices for a set of curves; obtaining information describing a curve buffer attribute corresponding to a data size of the curves in the set of curves; and obtaining an ordered list of control vertices for at least two curves of the set of curves using the curve buffer attribute.

For some embodiments of the example method, the set of curves includes a set of polylines encoded as a mesh.

Some embodiments of the example method may further include rendering the set of curves using the ordered list of control vertices.

For some embodiments of the example method, obtaining the ordered list of control vertices includes parsing the information describing positions of the control vertices for at least two curves of the set of curves using the curve buffer attribute.

For some embodiments of the example method, parsing the information includes: obtaining a first starting memory location in a buffer associated with positions of control vertices for the set of curves, wherein the first starting memory location corresponds to a first curve of the set of curves; and determining a second starting memory location in the buffer using the curve buffer attribute, wherein the second starting memory location corresponds to a second curve of the set of curves.

For some embodiments of the example method, the curve buffer attribute includes information corresponding to curve length for at least one curve of the set of curves.

For some embodiments of the example method, the curve buffer attribute includes a count of the control vertices for all curves in the set of curves.

For some embodiments of the example method, obtaining the ordered list of control vertices includes using a single accessor to access data in a single buffer associated with two or more curves of the set of curves.

Some embodiments of the example method may further include: detecting a presence of a curve loop property; and adding a segment to a curve of the set of curves to link a first control vertex of the curve to a second control vertex of the curve.

For some embodiments of the example method, obtaining the ordered list of control vertices for at least two curves of the set of curves using the curve buffer attribute includes generating the ordered list of control vertices for at least two curves of the set of curves using the curve buffer attribute.

Some embodiments of the example method may further include verifying the obtained information describing positions of control vertices contains POSITION attribute information for at least one curve of the set of curves.

Some embodiments of the example method may further include: obtaining one or more additional attributes associated with at least one curve of the set of curves; and using at least one of the one or more additional attributes in rendering the set of curves.

For some embodiments of the example method, the information describing the positions of the control vertices complies with Graphics Library Transmission Format (gITF).

For some embodiments of the example method, the information describing the positions of the control vertices complies with MPEG-I Scene Description format.

An example apparatus in accordance with some embodiments may include: a processor; and a computer-readable medium storing instructions operative, when executed by the processor, to cause the apparatus to perform any one of the methods listed above.

This disclosure describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the disclosure or scope of those aspects. Indeed, all of the different aspects can be combined and interchanged to provide further aspects. Moreover, the aspects can be combined and interchanged with aspects described in earlier filings as well.

Various numeric values may be used in the present disclosure, for example. The specific values are for example purposes and the aspects described are not limited to these specific values.

Embodiments described herein may be carried out by computer software implemented by a processor or other hardware, or by a combination of hardware and software. As a non-limiting example, the embodiments can be implemented by one or more integrated circuits. The processor can be of any type appropriate to the technical environment and can encompass one or more of microprocessors, general purpose computers, special purpose computers, and processors based on a multi-core architecture, as non-limiting examples.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this disclosure are not necessarily all referring to the same embodiment.

Additionally, this disclosure may refer to "determining" various pieces of information. Determining the information can include one or more of, for example, estimating the information, calculating the information, predicting the information, or retrieving the information from memory.

Further, this disclosure may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this disclosure may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

it is to be appreciated that the use of any of the following "*l*", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended for as many items as are listed.

Implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A method comprising:
obtaining information describing positions of control vertices for a set of curves;
obtaining information describing a curve buffer attribute corresponding to a data size of the curves in the set of curves; and
obtaining an ordered list of control vertices for at least two curves of the set of curves using the curve buffer attribute.

2. The method of claim 1, wherein the set of curves comprises a set of polylines encoded as a mesh.

3. The method of any one of claims 1-2, further comprising rendering the set of curves using the ordered list of control vertices.

4. The method of any one of claims 1-3, wherein obtaining the ordered list of control vertices comprises parsing the information describing positions of the control vertices for at least two curves of the set of curves using the curve buffer attribute.

5. The method of claim 4, wherein parsing the information comprises:
obtaining a first starting memory location in a buffer associated with positions of control vertices for the set of curves,
wherein the first starting memory location corresponds to a first curve of the set of curves; and
determining a second starting memory location in the buffer using the curve buffer attribute,
wherein the second starting memory location corresponds to a second curve of the set of curves.

6. The method of any one of claims 1-5, wherein the curve buffer attribute comprises information corresponding to curve length for at least one curve of the set of curves.

7. The method of any one of claims 1-5, wherein the curve buffer attribute comprises a count of the control vertices for all curves in the set of curves.

8. The method of any one of claims 1-7, wherein obtaining the ordered list of control vertices comprises using a single accessor to access data in a single buffer associated with two or more curves of the set of curves.

9. The method of any one of claims 1-8, further comprising:
detecting a presence of a curve loop property; and
adding a segment to a curve of the set of curves to link a first control vertex of the curve to a second control vertex of the curve.

10. The method of any one of claims 1-9, wherein obtaining the ordered list of control vertices for at least two curves of the set of curves using the curve buffer attribute comprises generating the ordered list of control vertices for at least two curves of the set of curves using the curve buffer attribute.

11. The method of any one of claims 1-10, further comprising verifying the obtained information describing positions of control vertices contains POSITION attribute information for at least one curve of the set of curves.

12. The method of any one of claims 1-11, further comprising:
obtaining one or more additional attributes associated with at least one curve of the set of curves; and
using at least one of the one or more additional attributes in rendering the set of curves.

13. The method of any one of claims 1-12, wherein the information describing the positions of the control vertices complies with Graphics Library Transmission Format (gITF).

14. The method of any one of claims 1-12, wherein the information describing the positions of the control vertices complies with MPEG-I Scene Description format.

15. An apparatus comprising:
a processor; and
a computer-readable medium storing instructions operative, when executed by the processor, to cause the apparatus to perform the method of any one of claims 1 through 14.
